(19) Europäisches Patentamt
European Patent Office
Office européen des brevets

(11) **EP 3 000 005 B1**

(12) **EUROPEAN PATENT SPECIFICATION**

(45) Date of publication and mention
of the grant of the patent:
**10.01.2024 Bulletin 2024/02**

(21) Application number: **14725372.8**

(22) Date of filing: **15.04.2014**

(51) International Patent Classification (IPC):
**G05B 23/02** *(2006.01)*    **G05B 15/02** *(2006.01)*

(52) Cooperative Patent Classification (CPC):
**G05B 15/02; G05B 23/0267**

(86) International application number:
**PCT/EP2014/057610**

(87) International publication number:
**WO 2014/187617 (27.11.2014 Gazette 2014/48)**

(54) **DEVICE FOR MONITORING THE HEALTH STATUS OF A LIMITED LIFE CRITICAL SYSTEM COMPRISING A DATA DISPLAYING UNIT**

VORRICHTUNG ZUR ÜBERWACHUNG DES GESUNDHEITSZUSTANDES EINES KRITISCHEN SYSTEMS MIT BEGRENZTER LEBENSDAUER MIT EINER DATENANZEIGEEINHEIT

DISPOSITIF DE SURVEILLANCE DE L'ÉTAT DE SANTÉ D'UN SYSTÈME CRITIQUE À DURÉE DE VIE LIMITÉE DOTÉ D'UNE UNITÉ D'AFFICHAGE DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2013 IT RM20130297**

(43) Date of publication of application:
**30.03.2016 Bulletin 2016/13**

(73) Proprietor: **MBDA ITALIA S.p.A.**
**00131 Roma (IT)**

(72) Inventor: **BANCALLARI, Luca**
**00131 Roma (IT)**

(74) Representative: **Carangelo, Pierluigi et al**
**Jacobacci & Partners S.p.A.**
**Via Tomacelli 146**
**00186 Roma (IT)**

(56) References cited:
| | |
|---|---|
| **EP-A2- 2 264 657** | **WO-A1-2011/022412** |
| **US-A- 4 981 139** | **US-A1- 2003 078 741** |
| **US-A1- 2005 134 461** | **US-A1- 2005 248 455** |
| **US-A1- 2007 001 862** | **US-A1- 2007 067 678** |
| **US-A1- 2010 090 808** | **US-B2- 7 884 727** |

**Description**

The present disclosure relates to the technical field of monitoring systems, and it particularly relates to a device for monitoring the health status of a limited life critical system comprising a data displaying unit.

Critical systems are defined those systems that, in the case of an operative failure, may cause severe consequences, such as:

- death or severe risks to people;
- loss or severe damaging of means and material;
- severe environmental damages.

For example, in the case that the critical system is represented by a weapon, such system can be defined as critical, since a malfunctioning thereof may jeopardize a military mission, hence the life of people related to it.

It is known that there is a series of external factors that degrade the performance of a system or a device, thereby altering its health status, even if it is not used. Such degradation is referred to as ageing.

The above-mentioned factors, which may act individually, or in a mutual combination, are represented, for example, by storage temperature, humidity, vibrations or mechanical shocks.

The critical systems, exactly in view of the consequences related to a possible malfunctioning thereof, are limited life system, since they have a life duration within which the degradation remains within accepted limits.

Based on statistical considerations, it is possible to estimate predictively the health status and the life duration of a critical system, for example, in order to program the replacement of the systems at the end of their life duration and/or to avoid using systems beyond their life duration. It shall be apparent that the above-mentioned statistical approach is not an optimal one, first of all, because it requires the provision of suitable and wide margins in order to ensure safety requirements, secondly because it cannot take into account particularly exceptional circumstances which a critical system may be subjected to. Furthermore, the above-mentioned statistical approach requires that long and expensive test procedures are carried out.

Reference is made to document WO US 2005/134461 A1 disclosing a device in Fig. 15 (see electronic label 141) for monitoring the health status of a limited critical system, the device further comprising a bistable display (see §76). The documents US 2005/248455 A1, US 2003/078741 A1 and US 2007/001862 A1 relate to devices using Arrhenius' law.

The object of the present disclosure is to provide a device that allows monitoring in real time the health status of a limited life critical system and that allows locally displaying data or information relative to the above-mentioned health status of the critical system.

Such an object is achieved by a monitoring device as generally defined in claim 1. Preferred and advantageous embodiments of the above-mentioned device are defined in the appended dependent claims.

The invention will be better understood from the following detailed description of a particular embodiment, given by way of example, and, therefore, being not limiting at all, with reference to the appended drawings, in which:

- Fig. 1 shows an exemplary block diagram of a monitoring system comprising a monitoring device intended for monitoring the health status of a critical system; and
- Fig. 2 shows an exemplary block diagram of the monitoring device of Fig. 1.

In the Figures, similar or like elements will be indicated by the same reference numerals.

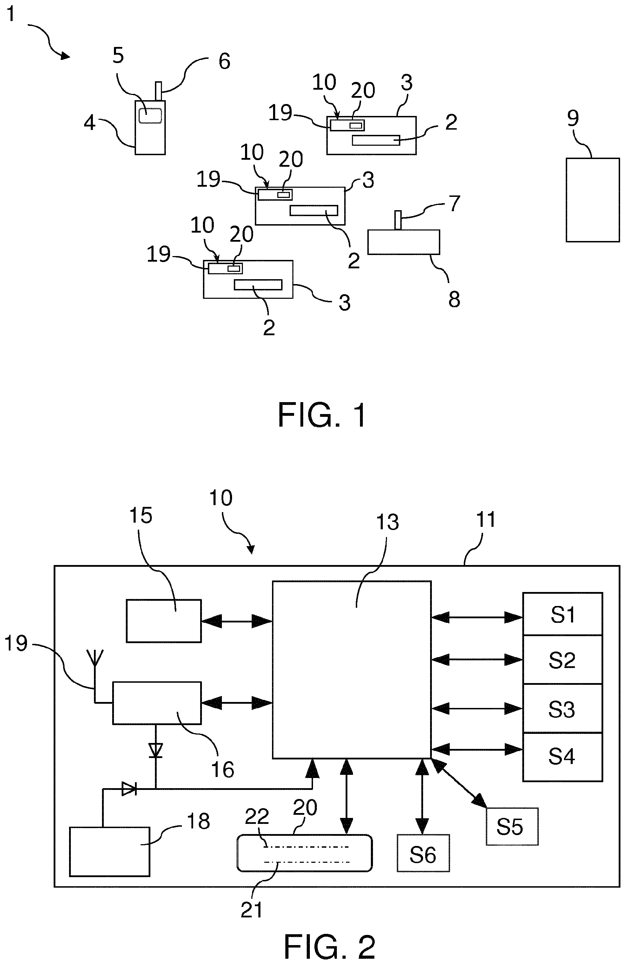

In Fig. 1, a non-limiting embodiment of a system 1 for monitoring in real time the health status of a critical system 2 is schematically shown.

In the particular example illustrated, without for this introducing any limitations, the monitoring system 1 is intended for monitoring the health status of a plurality of critical systems 2, which represent, for example, munitions 2 within a storage warehouse. In the illustrated example, each of said munitions 2 is housed in a corresponding container 3. In accordance with an embodiment, the above-mentioned containers 3 are pressurized containers, so that the pressure therein may be kept above the atmospheric pressure.

The containers 3 comprise a containment body to which corresponding monitoring devices 10 are associated, and more precisely mechanically coupled. In accordance with an embodiment, each monitoring device 10 comprises a device body 19 applied to one of the walls of the containment body of the respective container 3. For example, the device body 19 is applied to the container 3 so as to obstruct a special opening obtained in a wall of the container 3 containment body. The monitoring device 10 is provided with a local data displaying unit 20, in other terms, a display 20, which is visible from the outside of the device body 19. In the particular example illustrated, the monitoring system 1 comprises a mobile data collection terminal 4, for example, a handheld device provided with a display 5 and an antenna 6, adapted to query from remote the monitoring devices 10 associated to the corresponding munitions 2 and/or adapted to receive data autonomously transmitted by the monitoring devices 10. Alternatively, or in addition, at least one fixed collection mobile station 8 may be provided, for example provided with an antenna 7, which is adapted to query from remote the monitoring devices 10 and/or which is adapted to receive data autonomously transmitted by the monitoring devices 10.

In accordance with an embodiment, the data collection mobile device 4 and/or the fixed collection mobile station 8 are configured to transmit to a remote server 9 the information acquired from the monitoring devices 10, for example, to transmit such information onto a remote logistic management database.

In accordance with an embodiment, the mobile data collection terminal 4 and/or the fixed collection mobile station 8 are RFID reader devices (Radio Frequency IDentification devices) or similar devices. In alternative embodiments, the mobile data collection terminal 4 and/or the fixed collection mobile station 8 comprise radio interfaces of different types, for example: ZigBee or Wi-Fi (for example in accordance with the standard IEEE 802.11) or of the Smart Transducer type (for example, in accordance with the standard IEEE 1451).

Regarding the possible critical systems 2 to be monitored, it shall be apparent that these systems may include mechanical, electronic, electro-mechanical devices, optionally comprising also chemicals such as, for example, explosives, propellants, etc.

In Fig. 2, a functional block diagram of an embodiment of a device 10 for monitoring the health status of the associated limited life critical system 2 is shown.

The monitoring device 10 comprises at least one measurement sensor S1-S6 adapted to measure a magnitude adapted to affect the health status of the critical system 2, by outputting an electric signal carrying information relative to such magnitude. In accordance with an embodiment, the above-mentioned measurement sensor S1-S6 is a temperature sensor. In accordance with an embodiment, the above-mentioned sensor S1-S6 is a humidity sensor. In accordance with a further embodiment, the above-mentioned sensor S1-S6 is a vibration and/or mechanical shock sensor. In accordance with a further embodiment, the above-mentioned sensor S1-S6 is a pressure sensor. In accordance with an embodiment, the monitoring device 10 comprises a plurality of measurement sensors S1-S6 of different kinds, for example, two or more of the following sensors; a temperature sensor S1, a humidity sensor S2, a vibration sensor S3, for example, an acceleration sensor S4, a shock sensor S5, a pressure sensor S6. Henceforth in the present disclosure, reference will be made, without for this introducing any limitations, to the case where the monitoring device comprises a plurality of measurement sensors S1-S6.

The monitoring device 10 further comprises at least one processing unit 13, which is operatively connected to the measurement sensors S1-S6 and adapted to receive and sample the electric signals provided by the sensors S1-S6 to provide digital data related to the magnitudes measured by the measurement sensors S1-S6. For example, the above-mentioned processing unit 13 comprises a microcontroller, and more preferably a low consumption microcontroller.

The monitoring device 10 further comprises at least one memory 15 adapted to store the digital data sampled by the processing unit 13 and/or digital data obtained by the processing unit 13 by processing said sampled digital data. In the non-limiting example illustrated in Fig. 2, the above-mentioned memory 15 is represented as being external to the processing unit 13. In variant embodiment, such memory 15 could be internal to the processing unit 13, or multiple memory units could be provided, for example, an internal memory unit and an external memory unit.

The monitoring device 10 comprises a power supply system 18 of the processing unit 13. Such power supply system 18 can be also intended to directly or indirectly supply (in the illustrated example, by the processing unit 13) the measurement sensors S1-S6, in the case that such sensors S1-S6 require, for the operation thereof, a power supply source. In accordance with an embodiment, the above-mentioned power supply system 18 comprises a battery. In accordance with a further embodiment, the above-mentioned power supply system 18 comprises an energy harvesting device, internally or externally to the processing unit 13, for example adapted to transform mechanical vibrations into electric power. In accordance with a further embodiment, the above-mentioned power supply system 18 comprises a device adapted to convert a radiofrequency electromagnetic radiation into electric power, by exploiting the technique referred to as Wireless Power Transmission (WPT).

The monitoring device 10 comprises a wireless communication interface 16 for the radio transmission of the stored digital data. In accordance with an embodiment, the wireless communication interface 16 comprises an active or passive RFID transponder 16 adapted to receive a request from an external query RFID device, for example from the mobile data collection terminal 4 and/or the fixed collection mobile station 8, and to provide as a reply the stored digital data. In alternative embodiments, the mobile data collection terminal 4 and/or the fixed collection mobile station 8 comprise radio interfaces of a different type, for example: ZigBee or Wi-Fi (for example, in accordance with the standard IEEE 802.11) or of the Smart Transducer type (for example, in accordance with the standard IEEE 1451). In these embodiments, it is possible to provide for the monitoring devices 10 to autonomously transmit the stored data to the mobile data collection terminal 4 and/or the fixed collection mobile station 8. In this embodiment, it is further possible to provide for the monitoring devices 10 to be connected on the whole as a network of sensors, functionally representing nodes of a network of sensors. In such a case, the above-mentioned nodes 10 may form one or more networks that are adapted to reconfigure autonomously. It is possible to make so that the nodes 10 may mutually communicate autonomously, exchanging information and 'speaking' to each other. For example, in the case of a large monitoring system 1, it is sufficient that a node 10 may pass its information to another node so that the latter may convey it, directly or through other nodes, to a receiving point, illustrated for example by the mobile device 4 and/or the fixed data collection mobile station 8.

Henceforth reference will be made by sake of simplicity, without for this introducing any limitations, to the case where the wireless communication interface of the monitoring devices 10 is or comprises an active or passive RFID transponder 16.

In accordance with a preferred embodiment, the above-mentioned RFID transponder 16 comprises a PIFA (Planar Inverted F Antenna) antenna 19, for example, made as a micro-strip on a substrate 11, which for example represents a printed circuit board on which the various electronic components of the monitoring device 10 are mounted.

The RFID transponder 16 may be a component external to the processing unit 13 and operatively connected to the latter through suitable electric connections, or it may be a module provided within the processing unit 13, except for the antenna 19, which in any case would be external. In the first one of the above-mentioned embodiments, the memory 15 could be a memory, for example an EPROM, internal to the RFID transponder 16. In the other one of the above-mentioned embodiments, said memory 15 can be an external memory which the processing unit 13 accesses when the RFID transponder within the processing unit 13 receives a request from a fixed or mobile external query device 4,8. In such a case, and in the case that the RFID transponder is of the passive type, the processing unit 13 is energized, for example, to carry out the above-mentioned reading from the same internal passive RFID transponder. On the contrary, in the sampling and/or processing operations of the digital data, the processing unit 13 is supplied by the power supply system 18. Due to this reason, in the above-mentioned embodiment, the operation of the device 10 can be referred to as semi-passive, i.e., it is active during the data acquisition and processing, and it is passive when reading such data as a reply to a query by an external device 4,8. Due to the above-mentioned reason, two diodes have been illustrated in Fig. 2 between the RFID transponder 16 and the processing unit 13, and between the power supply system 18 and the processing unit 13, to the aim of pointing out that in the presence of a RFID link, the transponder 16 may supply the processing unit 13, while in the absence of such link, for the acquisition and storage of the samples, the processing unit 13 is usually supplied by the power supply system 18.

In accordance with an embodiment, the processing unit 13 is programmed to switch between two possible power consumption statuses, in which one of said statuses is a status having a relatively limited consumption compared to the other one, for example, a so-called powerdown status. In such embodiment, the processing unit 13 is such as to normally and mainly remain in the status of relatively limited consumption to switch to the other status at preset time intervals in order to sample the electric signals provided by the sensors S1-S6. For example, such sampling occurs every half hour, or every hour. Therefore, in this example it is apparent that the processing unit 13 mainly remains in the status of relatively limited energy consumption.

In accordance with an embodiment, the monitoring device 10 comprises a passive movement sensor S5 operatively connected to the processing unit 13. In accordance with an embodiment, such passive movement sensor S5 is an inertial mass sensor connected to two pins of the processing unit 13, in which a mobile mass following a handling of the monitoring device 10 is such as to determine an interrupt between the pins of the processing unit 13 in order to determine a reactivation of such processing unit 13 from a powerdown status.

The processing unit 13 is such as to switch from the relatively limited consumption status to the other status when the passive movement sensor S5 detects a movement having a width exceeding a preset threshold. In the above-mentioned embodiment, it is possible to provide that a vibration sensor and/or a mechanical shock sensor is comprised among the measurement sensors S1-S6, which is adapted to output an electric signal and in which, following said switching, the processing unit 13 is such as to sample the electric signal provided by the above-mentioned vibration and/or shock sensor and to store digital data related to the vibration and/or shock values if the latter exceed, for example, preset thresholds. In this manner, advantageously, the shock or vibration measurements are activated at each event, avoiding acquiring useless periodical measurements when the critical system is not undergoing vibrations and/or shocks.

The measurement sensor S1-S6 comprises a temperature sensor. In this case, the processing unit 13 is configured and programmed to calculate the equivalent storage time of the critical system 2 at a given reference temperature, for example, at 25° C. This measurement allows understanding how much the critical system 2 has aged compared to a storage under ideal conditions; hence, it provides a measurement that is useful to know the health status of the system, hence also the residual life of the system.

The processing unit 13 is configured and programmed to calculate the equivalent storage time of the critical system 2 at a reference temperature according to the Arrhenius law. Based on such law, it is possible to calculate an acceleration factor AF as:

$$\text{AF} = \exp\left[(-E_{aA}/k) * ((1/T_{int}) - (1/T_{ref}))\right] \quad (1.1)$$

in which:

$E_{aA}$ = is the activation energy in J/mol (values that may be programmed and that are stored in the memory) of the degradation process;

$T_{ref}$ = reference temperature in °K (for example, of 293.15 °K for 20 °C, or 298.15 °K for 25 °C);

$T_{int}$= is the current temperature within the critical system 2 in °K;

k = is the universal gas constant (8.314472 J/mol/°K). Advantageously, the temperature $T_{int}$ can be a temperature esteemed based on an external temperature measurement.

The equivalent storage time T25 (in the no-limiting hypothesis that the reference temperature is 25° C) is obtained by integrating the acceleration factor AF upon time.

Since the processing unit 13 is such as to operate in the discrete domain of sampled data, the processing unit 13 can be programmed and configured to calculate the above-mentioned integral at each step, i.e., after the acquisition of each sample, according to a recursive formula based on which the equivalent storage time T25 at the current step "t" is equal to the sum of the equivalent storage time at the previous step "t-1", and of an additional contribution accumulated in the time interval elapsed between the previous step "t-1" and the current step "t". Such contribution is given by the product of the sampling interval (for example, 0.5 hours) by the acceleration factor $AF_t$ calculated at step t, i.e.:

$$T25_t = T25_{t-1} + 0.5\ AF. \qquad (1.2)$$

In the case that the reference temperature is 25° C, the acceleration factor AF may be calculated as exp(k*(Tc-25)/(Tc+273), in which Tc represents an estimate of the internal temperature $T_{int}$ obtained from the samples of the external temperature measured by the temperature sensor.

In the formula (1.1) of the acceleration factor AF, the temperature $T_{int}$ represents the real temperature of the critical system 2. Since, in a non-limiting embodiment, it can be supposed that such temperature depends on a first-order transfer function from the sampled temperature Ts by the processing unit 13, it is possible to show that the temperature Tc may be obtained as the scalar product between a vector Ts of samples having a predetermined length stored in the vector of samples Ts according to a FIFO storage technique, in which, at each step, i.e., at each sampling, the last acquired sample is inserted at the end, with a shift of the other samples in the vector Ts towards the first element of the vector (the sample of which is thus overwritten and leaves the vector), and a vector vet_e of real numbers, which represent exponential increment values.

In order to provide an example, it shall be supposed that:

- t_sam represents the sampling interval;
- T1 represents the temperature stored by the sensor and sampled;
- the initial temperature within the critical system 2 is, by the sake of simplicity and without for this introducing any limitations, of 0° C.

Starting from the initial instant after the first step, i.e., after an interval t_sam, the temperature within the critical system will be $T1*(1-e^{-t\_sam/\tau})$ in which $\tau$ represents the time constant of the system. At the next step, after an interval t_sam, it shall be supposed that T2 represents the temperature stored by the sensor and sampled. The temperature interval T2-T1 will provide a contribution $(T2-T1) * (1-e^{-t\_sam/\tau})$ , while T1 will provide a contribution of $T1*(1-e^{-2t\_sam/\tau})$. Therefore, at the next step, the temperature esteemed within the critical system will be $T_c = T3* (1-e^{-t\_sam/\tau}) + T2* (e^{-t\_sam/\tau}-e^{-2t\_sam/\tau}) + T1*(e^{-2t\_sam/\tau}-e^{-3t\_sam/\tau})$. This represents in mathematical terms a scalar product between a vector Ts of sampled temperatures [T3 T2 T1], i.e., a vector Ts of temperature samples, and an exponential increment vector. Therefore, it has been noticed that excellent results are obtained even if the vector Ts of sampled temperatures is a vector of a reduced number of elements, for example, of about ten elements. This type of calculation allows saving processing time and dissipated power. Furthermore, it allows estimating the internal temperature of the critical system 2 from the external one, for example, from the temperature measured by the monitoring device 10 at the container 3 of the critical system 2, or generally at an external point with respect to the interior of the critical system 2.

Based on the above-mentioned description, therefore, it shall be apparent that in order to calculate the equivalent storage time, the processing unit 13 is programmed for:

- sampling the signal provided by the temperature sensor to obtain a digital sample and storing it in a vector of samples Ts having a limited and preset length according to a FIFO storage technique;
- at each sampling step, calculating the scalar product between said vector of samples Ts and a vector, for example, previously stored the device 10, of real numbers, which represent exponential increment values.

In a completely similar manner, if both a temperature sensor and a humidity sensor are provided, it is possible to calculate the ageing according to the Eyring-Peck-Arrhenius model (temperature-humidity combined model).

Similarly, if a vibration sensor is provided, it is possible to calculate the ageing according to the reverse power model.

In accordance with further embodiments, the monitoring device 10 is capable of monitoring ageing, hence the health status of the critical system 2, by further models such as, for example:

- controlling thresholds (OS - out of specification): it is recorded if preset temperature, humidity, vibration, shock, pressure thresholds are exceeded;
- turning on/off: the number of the turning on/off cycles is recorded;

- operative hours: the operative hours of the relative system are recorded.

In accordance with a further embodiment, the memory unit 13 is such as to store in the memory 15 at least one vector of data that represents a histogram and the processing unit 13 comparing said digital data to thresholds is such as to store the digital data in specific elements of said vector in order to provide said histogram. It shall be noticed that, in the case that such histogram is a temperature histogram, it shall be suitable to store the $T_c$ in such histogram, for example, at each step, i.e., the esteemed internal temperature of the critical system 2 in the manner described above.

With reference to the scheme of Fig. 2, the data displaying unit 20 of the monitoring device 10 is operatively connected to the processing unit 13, and it is adapted to locally display data relative to the health status of the critical system 2 and/or generally data relative to the magnitudes measured by the measurement sensors S1-S6.

The data displaying unit 20 particularly comprises bistable display 20, preferably a cholesteric display. A bistable display is a display requiring a power consumption only upon performing a refresh of the image and/or the data to be displayed thereon, i.e., basically only during the writing operation. After such operation, the image and/or data written on the display 20 remain readable for an indeterminate time, without the display 20 requiring a power supply source.

In accordance with an embodiment, the processing unit 13 is such as to update, i.e. perform a refresh of, the bistable display 20 sporadically and on occurrence of a preset condition detectable by the processing unit 13.

For example, if it is provided for displaying a datum 21 relative to an "alarm" (for example, the caption "ALARM") and/or "normality" (for example, the caption "GOOD") condition on the bistable display 20, the processing unit 13 is such as to control a refresh of the datum on the bistable display 20 only following a variation of said condition from "normality" to "alarm". In accordance with an embodiment, the displayed datum relative to the alarm condition specifies the measurement that determined the alarm, for example, displaying the datum "ALARM T" is provided for if the temperature detected by the sensor exceeds a preset threshold and/or the datum "ALARM h" is provided for if the humidity detected by the sensor exceeds a preset threshold, etc. In accordance with an embodiment, the displayed datum relative to the alarm condition is displayed even when the conditions that determined the alarm cease, until performing a forced reset, locally or remotely, by an operator.

In accordance with a further example, if the displaying on the bistable display 20 a datum 22 relative to a magnitude acquired by the sensor S1-S6, such as, for example, temperature, is provided for, the processing unit 13 is such as to control a refresh of the bistable display 20 only following a variation of said displayed datum 22 or said acquired magnitude exceeding a preset threshold value.

The bistable display 20 advantageously allows an inspector or operator getting an immediate indication of the conditions of a critical system during a normal operation of the monitoring device 10 without this requiring a significant power consumption. Furthermore, in the case of a failure of the monitoring device 10, for example, of the processing unit 13, it further advantageously allows having a piece of information about which the status was and/or which the storing conditions of the critical system were before the failure, also, but not only, in order to try and trace the cause of that failure.

From the description given above, it is possible to understand how a monitoring device of the type described above fully achieves the preset objects. Field experimental tests showed that a monitoring device of the type described above allows carrying out with a considerable autonomy an accurate and reliable monitoring of the health status of limited life critical systems.

It shall be apparent that, to the above-described monitoring device, those of ordinary skill in the art, in order to meet contingent, specific needs, will be able to make a number of modifications and variations, all of which anyhow falling within the protection scope of the invention, as defined by the following claims.

**Claims**

**1.** A device (10) for monitoring the health status of a limited life critical system (2), comprising:

- at least one measurement sensor (S1-S6) adapted to measure a magnitude adapted to affect the health status of said critical system (2) by outputting a signal carrying information relative to such magnitude;
- at least one processing unit (13) operatively connected to the sensor (S1-S6) and adapted to receive and sample said signal to provide digital data relative to such magnitude;
- at least one memory (15) adapted to store said digital data or digital data obtained therefrom through said processing unit (13);
- a power supply system (18) of the measurement sensor (S1-S4) and the processing unit (13);
- a communication interface (16) adapted to transmit said stored digital data;

wherein:

- said device (10) comprises a data displaying unit (20) operatively connected to the processing unit (13) and adapted to locally display data relative to the health status of said critical system (2) and/or data relative to said magnitude;
- the measurement sensor (S1-S6) comprises a temperature sensor, wherein the digital data comprise data related to a storage temperature of said critical system (2), and wherein the processing unit (13) is programmed to calculate an equivalent storage time at a reference temperature;
- the processing unit (13) is programmed to calculate the equivalent storage time at a reference temperature by calculating an acceleration factor according to the Arrhenius law;

**characterized in that:**

- the data displaying unit (20) comprises a bistable display;
- the processing unit (13) is programmed to control a refresh of the bistable display (20) sporadically and on occurrence of a preset condition detectable by the processing unit (13);

**and in that,** in order to calculate said equivalent storage time, the processing unit (13) is programmed for:

- sampling said signal to obtain a digital sample and storing it in a vector of samples having a predetermined length according to a FIFO storage technique;
- upon each sampling, carrying out the scalar product between said vector of samples and a vector of real numbers, which represent exponential increment values.

2. The device (10) for monitoring the health status of a limited life critical system (2) according to claim 1, wherein the bistable display (20) is adapted to display a datum (21) relative to an "alarm" and/or "normality" condition, and wherein the processing unit (13) is such as to control a refresh of said datum on the bistable display (20) only following a variation of said condition from "normality" to "alarm".

3. The device (10) for monitoring the health status of a limited life critical system (2) according to the claims 1 or 2, wherein the bistable display (20) is adapted to display a datum (22) relative to the magnitude measured by the sensor (S1-S6), and wherein the processing unit (13) is such as to control a refresh of the bistable display (20) only following a variation of said displayed datum (22) or said measured magnitude exceeding a preset threshold value.

4. The device (10) for monitoring the health status of a limited life critical system (2) according to any one of the previous claims, wherein the communication interface comprises a passive RFID transponder (16) adapted to receive a request by an external query RFID device (4, 8) and to provide as a reply said digital data to the query device (4, 8) by accessing the memory.

5. The monitoring device (10) according to any one of the previous claims, wherein the processing unit (13) is programmed to switch between two energy consumption statuses, wherein one of said statuses is a consumption status having a relatively limited consumption compared to the other one, the processing unit (13) being such as to normally and mainly remain in said status of relatively limited consumption to switch to the other status at preset time intervals in order to sample said signal.

6. The monitoring device (10) according to claim 5, comprising a passive movement sensor (S5) operatively connected to the processing unit (13), wherein the processing unit (13) is such as to switch from the relatively limited consumption status to the other status when the passive movement sensor (S5) detects a movement having a width exceeding a preset threshold.

7. The monitoring device (10) according to claim 6, wherein said at least one measurement sensor (S1-S6) comprises a vibration and/or mechanical shock sensor adapted to output an electric signal, and wherein, following said switching, the processing unit (13) is such as to sample said electric signal provided by the vibration and/or shock sensor.

8. The monitoring device (10) according to any one of the previous claims, wherein the acceleration factor according to the Arrhenius law is calculated according to the following formula:

$$AF = \exp\,[\,(-E_{aA}/k)\,*\,(\,(1/T_{int})-(1/T_{ref})\,)\,]$$

In which:

AF = acceleration factor;
$E_{aA}$ = activation energy in J/mol of a degradation process of the critical system (2);
$T_{ref}$ = reference temperature in °K;
$T_{int}$= current temperature within the critical system (2) in °K;
k = universal gas constant = 8.314472 J/mol/°K.

9. The monitoring device (10) according to claims 6 or 7, wherein said passive movement sensor (S5) is an inertial mass sensor connected to two pins of the processing unit (13), in which a mobile mass following a handling of the monitoring device (10) is such as to determine an interrupt between the pins of the processing unit (13) in order to determine a reactivation of such processing unit (13) from a powerdown status.

10. The monitoring device (10) according to any one of the previous claims, wherein the processing unit (13) is such as to store in said memory (15) at least one vector of data that represents a histogram, and wherein the processing unit (13), by comparing said digital data to thresholds, is such as to store the digital data in specific elements of said vector in order to provide said histogram usable by said external query RFID device (4, 8) .

11. A container (3) for a critical system (2) comprising a containment body adapted to house a critical system (2) therein and **characterized in that** it comprises at least one monitoring device (10) according to any one of the previous claims, which is mechanically coupled to said containment body.

12. A container (3) according to claim 11, wherein the container (3) is a pressurized container, so that the pressure therein is kept above the atmospheric pressure.

13. A container (3) according to claim 11, wherein said critical system (2) is an ammunition stored in said container (3).

**Patentansprüche**

1. Vorrichtung (10) zur Überwachung eines Gesundheitszustands eines kritischen Systems (2) mit begrenzter Lebensdauer, umfassend:

- mindestens einen Messsensor (S1-S6), der so ausgelegt ist, dass er eine Messgröße misst, die den Gesundheitszustand des kritischen Systems (2) beeinflussen kann, indem er ein Signal ausgibt, das Informationen in Bezug auf diese Messgröße transportiert;
- mindestens eine Verarbeitungseinheit (13), die betriebsmäßig mit dem Sensor (S1-S6) verbunden und so ausgelegt ist, dass sie das Signal zu empfängt und abtastet, um digitale Daten in Bezug auf eine derartige Messgröße bereitzustellen;
- mindestens einen Speicher (15), der so ausgelegt ist, dass er die digitalen Daten oder daraus erhaltene digitale Daten über die Verarbeitungseinheit (13) speichert;
- ein Stromversorgungssystem (18) des Messsensors (S1-S4) und der Verarbeitungseinheit (13);
- eine Kommunikationsschnittstelle (16), die zum Übertragen der gespeicherten digitalen Daten ausgelegt ist;

wobei:

- die Vorrichtung (10) eine Datenanzeigeeinheit (20) umfasst, die betriebsmäßig mit der Verarbeitungseinheit (13) verbunden und ausgelegt ist, Daten in Bezug auf den Gesundheitszustand des kritischen Systems (2) und/oder Daten in Bezug auf die Messgröße lokal anzuzeigen;
- der Messsensor (S1-S6) einen Temperatursensor umfasst, wobei die digitalen Daten Daten umfassen, die sich auf eine Lagerungstemperatur des kritischen Systems (2) beziehen und wobei die Verarbeitungseinheit (13) so programmiert ist, dass sie eine äquivalente Lagerungszeit bei einer Referenztemperatur berechnet;
- die Verarbeitungseinheit (13) so programmiert ist, dass sie die äquivalente Lagerungszeit bei einer Referenztemperatur berechnet, indem sie einen Beschleunigungsfaktor gemäß dem Arrhenius-Gesetz berechnet;

**dadurch gekennzeichnet, dass:**

- die Datenanzeigeeinheit (20) eine bistabile Anzeige umfasst;
- die Verarbeitungseinheit (13) so programmiert ist, dass sie eine Aktualisierung der bistabilen Anzeige (20) sporadisch und beim Auftreten einer voreingestellten Bedingung steuert, die durch die Verarbeitungseinheit (13) erkennbar ist;

**und dadurch,** dass die Verarbeitungseinheit (13) zum Berechnen der äquivalenten Lagerungstemperatur so programmiert ist, dass sie:

- das Signal abtastet, um einen digitalen Abtastwert zu erhalten, und diesen in einem Vektor von Abtastwerten speichert, der eine vorgegebene Länge gemäß einer FIFO-Speichertechnik aufweist;
- nach jedem Abtasten das Skalarprodukt zwischen dem Vektor von Abtastwerten und einem Vektor reeller Zahlen durchführt, die exponentielle Inkrementwerte darstellen.

2. Vorrichtung (10) zur Überwachung eines Gesundheitszustands eines kritischen Systems (2) mit begrenzter Lebensdauer nach Anspruch 1, wobei die bistabile Anzeige (20) so ausgelegt ist, dass sie einen Messwert (21) in Bezug auf eine Bedingung "Alarm" und/oder "Normal" anzeigt, und wobei die Verarbeitungseinheit (13) so beschaffen ist, dass sie eine Aktualisierung des Messwerts auf der bistabilen Anzeige (20) nur dann steuert, wenn die Bedingung von "Normal" zu "Alarm" wechselt.

3. Vorrichtung (10) zur Überwachung eines Gesundheitszustands eines kritischen Systems (2) mit begrenzter Lebensdauer nach Anspruch 1 oder 2, wobei die bistabile Anzeige (20) so ausgelegt ist, dass sie einen Messwert (22) in Bezug auf die durch den Sensor (S1-S6) gemessene Messgröße anzeigt, und wobei die Verarbeitungseinheit (13) so beschaffen ist, dass sie eine Aktualisierung der bistabilen Anzeige (20) nur dann steuert, wenn eine Änderung des angezeigten Messwerts (22) oder der gemessenen Messgröße einen voreingestellten Schwellenwert überschreitet.

4. Vorrichtung (10) zur Überwachung eines Gesundheitszustands eines kritischen Systems (2) mit begrenzter Lebensdauer nach einem der vorherigen Ansprüche, wobei die Kommunikationsschnittstelle einen passiven RFID-Transponder (16) umfasst, der so ausgelegt ist, dass er eine Anfrage von einer externen RFID-Abfragevorrichtung (4, 8) empfängt und der Abfragevorrichtung (4, 8) als Antwort die digitalen Daten durch Zugreifen auf den Speicher bereitstellt.

5. Überwachungsvorrichtung (10) nach einem der vorhergehenden Ansprüche, wobei die Verarbeitungseinheit (13) so programmiert ist, dass sie zwischen zwei Energieverbrauchszuständen umschaltet, wobei einer der Zustände ein Verbrauchszustand ist, der im Vergleich zu dem anderen einen relativ begrenzten Verbrauch aufweist, wobei die Verarbeitungseinheit (13) so beschaffen ist, dass sie normalerweise und hauptsächlich in dem Zustand des relativ begrenzten Verbrauchs verbleibt, um in voreingestellten Zeitintervallen in den anderen Zustand umzuschalten, um das Signal abzutasten.

6. Überwachungsvorrichtung (10) nach Anspruch 5, die einen passiven Bewegungssensor (S5) umfasst, der betriebsmäßig mit der Verarbeitungseinheit (13) verbunden ist, wobei die Verarbeitungseinheit (13) so beschaffen ist, dass sie aus dem Zustand des relativ begrenzten Verbrauchs in den anderen Zustand umschaltet, wenn der passive Bewegungssensor (S5) eine Bewegung erkennt, die eine Breite aufweist, die einen voreingestellten Schwellenwert überschreitet.

7. Überwachungsvorrichtung (10) nach Anspruch 6, wobei der mindestens eine Messsensor (S1-S6) einen Vibrationssensor und/oder einen Sensor für mechanische Stöße umfasst, der so ausgelegt ist, dass er ein elektrisches Signal ausgibt, und wobei nach dem Umschalten die Verarbeitungseinheit (13) so beschaffen ist, dass sie das durch den Vibrations- und/oder Stoßsensor bereitgestellte elektrische Signal abtastet.

8. Überwachungsvorrichtung (10) nach einem der vorhergehenden Ansprüche, wobei der Beschleunigungsfaktor gemäß dem Arrhenius-Gesetz nach folgender Formel berechnet wird:

$$AF = \exp[(-E_{aA}/k) * ((1/T_{int}) - (1/T_{ref}))]$$

wobei:

AF = Beschleunigungsfaktor;
$E_{aA}$ = Aktivierungsenergie in J/mol eines Verschlechterungsprozesses des kritischen Systems (2);
$T_{ref}$ = Referenztemperatur in °K;
$T_{int}$ = aktuelle Temperatur innerhalb des kritischen Systems (2) in °K;
k = universelle Gaskonstante = 8,314472 J/mol/°K.

9. Überwachungsvorrichtung (10) nach Anspruch 6 oder 7, wobei der passive Bewegungssensor (S5) ein Trägheitsmassensensor ist, der mit zwei Pins der Verarbeitungseinheit (13) verbunden ist, in dem sich eine bewegliche Masse befindet, die einer Handhabung der Überwachungsvorrichtung (10) folgt, um eine Unterbrechung zwischen den Pins der Verarbeitungseinheit (13) zu ermitteln, um eine Reaktivierung dieser Verarbeitungseinheit (13) aus einem abgeschalteten Zustand zu ermitteln.

10. Überwachungsvorrichtung (10) nach einem der vorhergehenden Ansprüche, wobei die Verarbeitungseinheit (13) so beschaffen ist, dass sie in dem Speicher (15) mindestens einen Datenvektor speichert, der ein Histogramm darstellt, und wobei die Verarbeitungseinheit (13) durch Vergleichen der digitalen Daten mit Schwellenwerten so beschaffen ist, dass die digitalen Daten in bestimmten Elementen des Vektors gespeichert sind, um das Histogramm für die externe RFID-Abfragevorrichtung (4, 8) nutzbar zu machen.

11. Behälter (3) für ein kritisches System (2), der einen Gehäusekörper umfasst, der so ausgelegt ist, dass er ein kritisches System (2) darin aufnimmt, und **dadurch gekennzeichnet, dass** er mindestens eine Überwachungsvorrichtung (10) nach einem der vorhergehenden Ansprüche umfasst, die mit dem Gehäusekörper mechanisch gekoppelt ist.

12. Behälter (3) nach Anspruch 11, wobei der Behälter (3) ein Druckbehälter ist, sodass der Druck darin oberhalb des Atmosphärendrucks gehalten wird.

13. Behälter (3) nach Anspruch 11, wobei das kritische System (2) eine in dem Behälter (3) gelagerte Munition ist.

**Revendications**

1. Dispositif (10) de surveillance de l'état de santé d'un système critique à durée de vie limitée (2), comprenant :

- au moins un capteur de mesure (S 1 à S6) conçu pour mesurer une amplitude adaptée pour influencer l'état de santé dudit système critique (2) en émettant un signal portant des informations relatives à cette amplitude ;
- au moins une unité de traitement (13) fonctionnellement connectée au capteur (S 1 à S6) et conçue pour recevoir et échantillonner ledit signal afin de fournir des données numériques relatives à ladite amplitude ;
- au moins une mémoire (15) conçue pour stocker lesdites données numériques ou les données numériques obtenues à partir de celle-ci par l'intermédiaire de ladite unité de traitement (13) ;
- un système d'alimentation électrique (18) du capteur de mesure (S1 à S4) et de l'unité de traitement (13) ;
- une interface de communication (16) conçue pour transmettre lesdites données numériques stockées ;

dans lequel :

- ledit dispositif (10) comprend une unité d'affichage de données (20) fonctionnellement connectée à l'unité de traitement (13) et conçue pour afficher localement des données relatives à l'état de santé dudit système critique (2) et/ou des données relatives à ladite amplitude ;
- le capteur de mesure (S 1 à S6) comprend un capteur de température, dans lequel les données numériques comprennent des données liées à une température de stockage dudit système critique (2), et dans lequel l'unité de traitement (13) est programmée pour calculer une durée de stockage équivalente à une température de référence ;

- l'unité de traitement (13) est programmée pour calculer la durée de stockage équivalente à une température de référence en calculant un facteur d'accélération selon la loi d'Arrhenius ;

**caractérisé en ce que :**

- l'unité d'affichage de données (20) comprend un afficheur bistable ;
- l'unité de traitement (13) est programmée pour commander un rafraîchissement de l'afficheur bistable (20) de manière sporadique et lors de l'apparition d'un état prédéfini détectable par l'unité de traitement (13) ;

**et en ce que,** pour calculer ladite durée de stockage équivalente, l'unité de traitement (13) est programmée pour :

- échantillonner ledit signal afin d'obtenir un échantillon numérique et le stocker dans un vecteur d'échantillons ayant une longueur prédéterminée selon une technique de stockage FIFO ;
- à chaque échantillonnage, réaliser le produit scalaire entre ledit vecteur d'échantillons et un vecteur de nombres réels, qui représentent des valeurs d'incrément exponentiel.

2. Dispositif (10) de surveillance de l'état de santé d'un système critique à durée de vie limitée (2) selon la revendication 1, dans lequel l'afficheur bistable (20) est conçu pour afficher une donnée (21) relative à un état « d'alarme » et/ou de « normalité », et dans lequel l'unité de traitement (13) est à même de commander un rafraîchissement de ladite donnée sur l'afficheur bistable (20) uniquement suite à un passage dudit état de « normalité » à « d'alarme ».

3. Dispositif (10) de surveillance de l'état de santé d'un système critique à durée de vie limitée (2) selon les revendications 1 ou 2, dans lequel l'afficheur bistable (20) est conçu pour afficher une donnée (22) relative à l'amplitude mesurée par le capteur (S 1 à S6), et dans lequel l'unité de traitement (13) est à même de commander un rafraîchissement de l'afficheur bistable (20) uniquement suite à une variation de ladite donnée affichée (22) ou de ladite amplitude mesurée dépassant une valeur seuil prédéfinie.

4. Dispositif (10) de surveillance de l'état de santé d'un système critique à durée de vie limitée (2) selon l'une quelconque des revendications précédentes, dans lequel l'interface de communication comprend un transpondeur RFID passif (16) conçu pour recevoir une requête par un dispositif RFID d'interrogation externe (4, 8) et pour fournir en réponse lesdites données numériques au dispositif d'interrogation (4, 8) en accédant à la mémoire.

5. Dispositif de surveillance (10) selon l'une quelconque des revendications précédentes, dans lequel l'unité de traitement (13) est programmée pour commuter entre deux états de consommation d'énergie, l'un desdits états étant un état de consommation ayant une consommation relativement limitée par rapport à l'autre et l'unité de traitement (13) étant à même de rester normalement et principalement dans ledit état de consommation relativement limitée pour commuter à l'autre état à des intervalles temporels prédéfinis afin d'échantillonner ledit signal.

6. Dispositif de surveillance (10) selon la revendication 5, comprenant un capteur de mouvement passif (S5) connecté fonctionnellement à l'unité de traitement (13), dans lequel l'unité de traitement (13) est à même de commuter de l'état de consommation relativement limitée à l'autre état, lorsque le capteur de mouvement passif (S5) détecte un mouvement de largeur dépassant un seuil prédéfini.

7. Dispositif de surveillance (10) selon la revendication 6, dans lequel ledit au moins un capteur de mesure (S1 à S6) comprend un capteur de vibrations et/ou de chocs mécaniques conçu pour émettre un signal électrique et dans lequel après ladite commutation, l'unité de traitement (13) est à même d'échantillonner ledit signal électrique fourni par le capteur de vibrations et/ou de chocs.

8. Dispositif de surveillance (10) selon l'une quelconque des revendications précédentes, dans lequel le facteur d'accélération selon la loi d'Arrhenius est calculé selon la formule suivante :

$$AF = \exp\left[\ (-E_{aA}/k) * ((1/T_{int}) - (1/T_{ref}))\ \right]$$

Où :

AF = facteur d'accélération ;

$E_{aA}$ = énergie d'activation en J/mol d'un processus de dégradation du système critique (2) ;

$T_{ref}$ = température de référence en °K ;

$T_{int}$ = température actuelle dans le système critique (2) en °K ;

k = constante universelle des gaz = 8,314472 J/mol/°K.

**9.** Dispositif de surveillance (10) selon les revendications 6 ou 7, dans lequel ledit capteur de mouvement passif (S5) est un capteur de masse inertielle connecté à deux broches de l'unité de traitement (13), dans lequel une masse mobile suite à une manipulation du dispositif de surveillance (10) est est à même de déterminer une interruption entre les broches de l'unité de traitement (13) afin de déterminer une réactivation de cette unité de traitement (13) à partir d'un état de mise hors tension.

**10.** Dispositif de surveillance (10) selon l'une quelconque des revendications précédentes, dans lequel l'unité de traitement (13) est à même de stocker dans ladite mémoire (15) au moins un vecteur de données qui représente un histogramme, et dans lequel l'unité de traitement (13), en comparant lesdites données numériques à des seuils, est à même de stocker les données numériques dans des éléments spécifiques dudit vecteur afin de rendre ledit histogramme utilisable par ledit dispositif RFID d'interrogation externe (4, 8).

**11.** Conteneur (3) destiné à un système critique (2) comprenant un corps de confinement conçu pour loger un système critique (2) et **caractérisé en ce qu'**il comprend au moins un dispositif de surveillance (10) selon l'une quelconque des revendications précédentes, qui est accouplé mécaniquement audit corps de confinement.

**12.** Conteneur (3) selon la revendication 11, dans lequel le conteneur (3) est un conteneur sous pression, de sorte que la pression en son sein est maintenue au-dessus de la pression atmosphérique.

**13.** Conteneur (3) selon la revendication 11, dans lequel ledit système critique (2) est une munition stockée dans ledit conteneur (3).

FIG. 1

FIG. 2

**EP 3 000 005 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005134461 A1
- US 2005248455 A1
- US 2003078741 A1
- US 2007001862 A1